# EUROPEAN PATENT SPECIFICATION

(11) **EP 2 929 771 B1**
(45) Date of publication and mention of the grant of the patent: **24.05.2017**
(21) Application number: 15162187.7
(22) Date of filing: 01.04.2015
(51) Int. Cl.: A01C 23/04, B60P 3/22

(54) **PUMP CRANE WITH DOUBLE-HINGED KNUCKLE JOINTS**
PUMPKRAN MIT DOPPELT ARTIKULIERTEN WINKELGELENKEN
GRUE À POMPE AVEC RACCORDS À GENOUILLÈRE À DOUBLE CHARNIÈRE

(30) Priority: 09.04.2014 DK 201400206
(43) Date of publication of application: 14.10.2015
(73) Proprietor: Sørensen, Harry Højvang, 6818 Årre (DK)
(72) Inventor: Sørensen, Harry Højvang, 6818 Årre (DK)
(74) Representative: Carlsen, Bjarne

(56) References cited:
- EP-A1- 0 258 165
- FR-A1- 2 965 143
- US-A- 4 659 293
- US-A- 5 624 241

## Description

The present invention relates to a pump crane with knuckle joints, primarily for use on slurry wagons and trailers.

### Background of the invention

Self-loading slurry wagons and trailers are commonly known. Usually, they have a crane arm arranged along the longitudinal direction of the vehicle. This crane arm comprises one or more slurry hoses connecting a pump head arranged at the end of the crane arm to the tank of the vehicle, so that this tank can be filled with or emptied for slurry, for instance from or to a storage tank, by means of one or more pumps arranged within the pump head.

EP 0258165 A1 shows such a pump crane, which is mounted on a slurry wagon or a slurry trailer by means of a turntable and comprises a crane arm with multiple intermediate parts, a piping from the turntable to a hydraulic pump head at the outermost end of the crane arm and means for pumping slurry through the piping to or from the pump head.US 4659293 discloses a pump crane for filling and emptying a slurry wagon or trailer, which pump crane is mounted on the slurry wagon or trailer by means of a turntable and comprises a crane arm with a plurality of intermediate parts connected by knuckle joints, a piping from the turntable to the outermost end of the crane arm, and means for pumping slurry through the piping, wherein the pump crane further comprises means for swinging, raising, lowering, unfolding and folding the crane arm, wherein the piping is composed of solid pipe sections and flexible slurry hoses in the knuckle joints.

A known disadvantage of such crane arms is that the hosing limits the flexibility of the arm.

Typically, the structure of such crane arms comprise a number of jointed sections with the slurry hose arranged internally therein, the maximal bending in each joint being about 100°, which is necessary for obtaining the needed flexibility of the movement possibilities of the crane arm.

This bending of the hose results in a very short expected service life and in a large risk of a collapse of the hose. The hose extension of the hose being integrated within the crane arm, a replacement of the hose is both cumbersome and expensive.

Covered storage tanks often have a limited opening at the top, through which the pump head must be entered. Due to limited reach and flexibility of the crane arm, this means that often it is necessary to move the vehicle when unfolding and folding the crane in order to position the pump head correctly.

The crane arm may also comprise an overflow pipe, popularly known as a "burp pipe", often consisting in a more or less loose hanging hose continuing into the slurry tank of the vehicle to the highest area therein. In a slurry wagon, this area is typically near the rear end of the tank, whereas in a truck trailer for transporting slurry, it is typically near the front end of the tank. This overflow pipe is also used for exhaust and intake of air when the slurry tank of the vehicle is filled and emptied, respectively.

### Brief description of the invention

It is an object of the present invention to provide a pump crane, which at least partly overcomes the above-mentioned disadvantages of the known solutions within the art.

The invention relates to a pump crane for filling and emptying a slurry wagon or trailer, which pump crane is mounted on the slurry wagon or trailer by means of a turntable and comprises a crane arm with a plurality of intermediate parts connected by knuckle joints, a piping from the turntable to a hydraulic pump head arranged at the outermost end of the crane arm, and means for pumping slurry through the piping to or from the pump head, wherein the pump crane further comprises means for swinging, raising, lowering, unfolding and folding the crane arm, wherein the piping is composed of solid pipe sections constituting supporting parts of the intermediate parts and flexible slurry hoses in the knuckle joints, and wherein the knuckle joints are double-hinged, each knuckle joint being rotatably connected to the two neighbouring intermediate parts of the crane arm in such a way that there is a physical distance between the two pivot points, in which the knuckle joint can be rotated relatively to each of the two intermediate parts, respectively.

Thus, the invention differs from known solutions as for instance described in US 4659293 in that double-hinged knuckle joints are used, each of which is connected to the neighbouring intermediate parts of the crane arm as described above.

In an embodiment of the invention, the physical distance between the two pivot points corresponds to between 20 % and 50 % of the arch length of the piece(s) of slurry hose passing through the knuckle joint.

By using such double-hinged knuckle joints, a natural bending of the slurry hose along a soft curve corresponding to the bending radius of the hose is obtained, and the risk of a collapse of the hose is minimised. A larger flexibility, a smaller bending radius and a much larger working area of the crane arm are obtained. This, in turn, results in a pump crane giving a less space-demanding and more flexible filling device, which can, for instance, be used in large depths in storage tanks of large capacity.

In an embodiment of the invention, the pieces of flexible slurry hose are provided with assembled hose connections for mounting onto the solid pipe sections.

By providing the pieces of slurry hose with assembled hose connections, for instance with clamps and flanges to be bolted onto the solid pipe sections, it is obtained that a given piece of slurry hose can be replaced in a fast and easy way.

In an embodiment of the invention, the maximal bending in a knuckle joint between two neighbouring intermediate parts of the crane arm is at least 80°, preferably at least 100°.

Such bending angles ensure an optimal flexibility of the crane arm without leading to too sharp bending of the slurry hose.

In an aspect of the invention, it relates to a slurry wagon or trailer comprising a pump crane as described above.

### The drawing

A few exemplary embodiments of the invention are described in more detail in the following with reference to the drawing, of which
- Fig. 1: illustrates a slurry wagon according to an embodiment of the invention as seen obliquely from above with the crane arm in the transport position,
- Fig. 2: shows a cross-section of the same slurry wagon as seen from the side,
- Fig. 3A: illustrates the slurry wagon as seen from the front with the crane arm in a partly unfolded position,
- Fig. 3B: illustrates a part of the slurry wagon as seen obliquely from above with the crane arm in the same position as shown in Fig. 3A,
- Fig. 3C: shows an enlarged cross-section of a part of Fig. 3A,
- Fig. 4A: illustrates the slurry wagon as seen from the front with the crane arm in a lowered and fully extended position, and
- Fig. 4B: illustrates a part of the slurry wagon as seen obliquely from above with the crane arm in the same position as shown in Fig. 4A.

### Detailed description of the invention

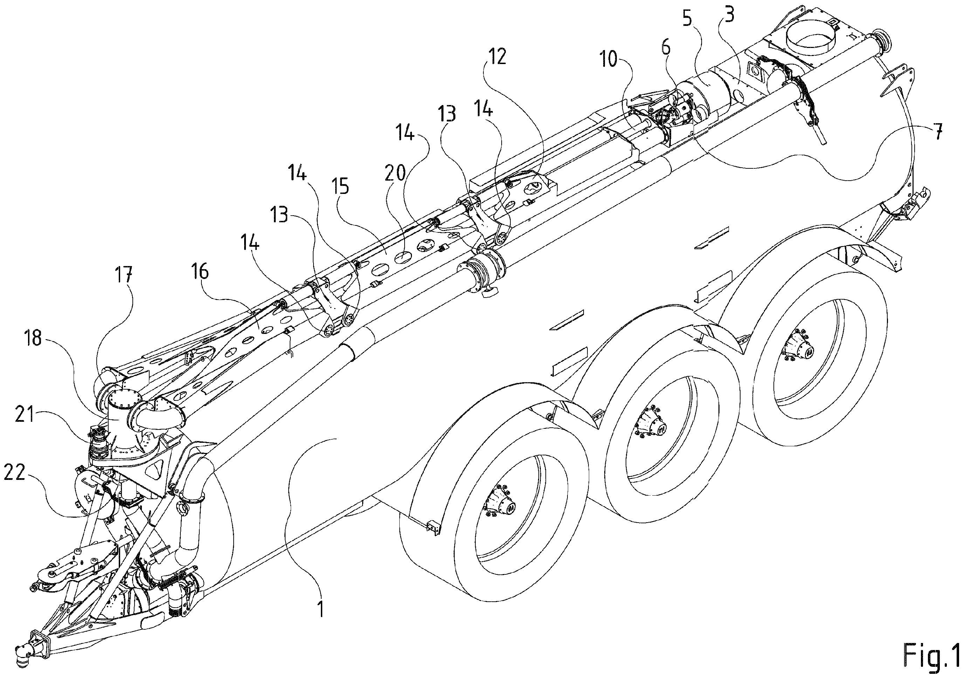

Fig. 1 illustrates a slurry wagon 1 according to an embodiment of the invention as seen obliquely from above with the crane arm of the pump crane in the transport position along the upper side of the slurry wagon 1. The piping of the pump crane is connected to the main part of the slurry wagon 1 by means of a tower 18, which is mounted on a turntable arranged on a console 22 at the front of the slurry wagon 1 along with an oil motor 21 for swinging the pump crane. From this point, the pump crane extends backwards along the slurry wagon 1 ending in a pump head 5, which, in the illustrated transport position, rests in a waste tray 3 with inlet to the tank of the slurry wagon 1. In other embodiments of the invention, the orientation of the system can be reversed, so that the console 22 is instead mounted at the rear end of the vehicle 1 and the pump crane extends forward in the transport position.

In the illustrated embodiment, the turntable is designed as a tower 18 with a swivel 17 on each side. Since there are no hose connections, it is possible to obtain an upward and downward rotation of the innermost intermediate part 16 of the crane arm of up to 100° by means of actuators.

A double piping is used all the way from the tower 18 through a swivel 17 and further through an innermost 16, a mid-most 15 and an outermost 12 intermediate part of the crane arm connected by two knuckle joints 13 to the pump head 5. Between the outermost intermediate part 12 and the pump head 5 is arranged a 45° knuckle joint 7 providing the pump crane with further flexibility. In the same area is arranged an oil motor 6 for driving the hydraulic pump head 5.

In the illustrated embodiment, a low constructional height of the pump crane can be obtained, and the overflow pipe 19 is well protected between the double piping in the full length of the pump crane. The same goes for the necessary hydraulic hoses 20 for driving the pump crane.

In the intermediate parts 12, 15, 16 of the crane arm, the double piping consists of solid parallel pipe sections constituting essential supporting parts of the construction of the intermediate parts 12, 15, 16. Between these solid pipe sections, i.e. through the knuckle joints 13, the double piping consists of flexible slurry hoses 8. This means that, if a slurry hose 8 is damaged, only a short piece (typically about 1 meter) needs to be replaced, whereas, in known constructions, the whole slurry hose 8 extending in the full length or at least most of the length of the crane arm must be replaced, which is not only expensive but also rather cumbersome.

The double-hinged construction of the knuckle joints 13 with different pivot points 14 for the two intermediate parts 12, 15, 16 of the crane arm being connected by the knuckle joint 13 results in a changed shape of the arching of the slurry hoses 8 as compared to other hinged joints known in the art. This means that the slurry hose 8 extends in a natural arch through the knuckle joint 13 contrary to the well-known compression of the hose 8 known from known solutions in the art, often resulting in a bend or a collapse of the hose 8. Apart from protecting the slurry hoses 8, this construction of the knuckle joints 13 also results in a better angle of traction for the hydraulic cylinders controlling the bending of the knuckle joints 13 and in a smaller bending radius of the crane arm for similar slurry hose 8 dimensions as compared to other known constructions.

The outermost intermediate part 12 of the crane arm comprises a telescopic joint 9 driven by a piston 10 so that the length of the outermost intermediate part 12 can be varied. The use of a double piping with two solid parallel pipe sections prevents rotation of the telescopic joint 9. This means that, contrary to known constructions, in which there is only one pipe in the telescopic joint, the pipes do not need to have non-circular cross-sectional profiles in order to prevent such a rotation. The use of pipes with circular cross-sectional profiles makes it much easier to obtain an effective tightening between the pipes sliding into each other, than is the case with pipes with non-circular cross-sectional profiles as are used in solutions known in the art.

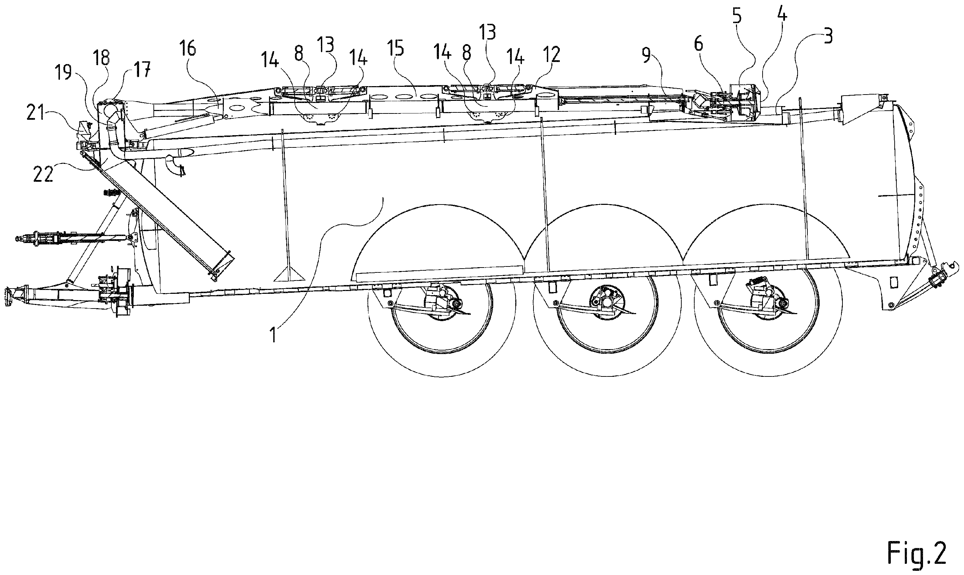

Fig. 2 shows a cross-section of the same slurry wagon 1 as seen from the side. In this figure, it is more clearly seen, how relatively short pieces of flexible slurry hose 8 connect the solid pipe sections in the neighbouring intermediate parts 12, 15, 16 through the knuckle joints 13 connecting them. Furthermore, it is seen how the overflow pipe 19 extends from the interior of the slurry wagon 1 through the tower 18 and further out to the crane arm, from where it is typically continued in the form of a hose to the pump head 5.

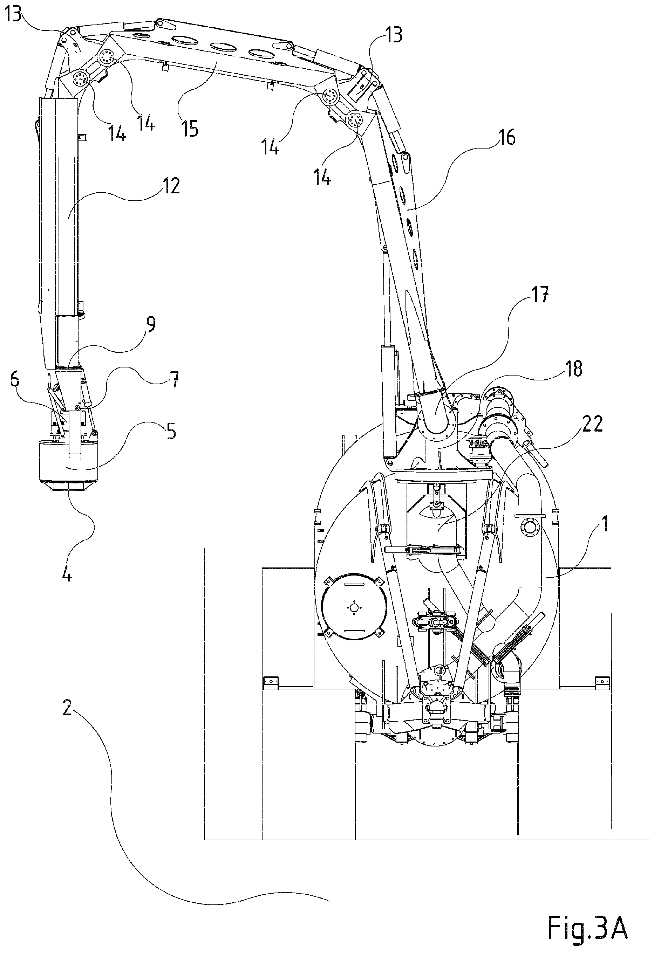

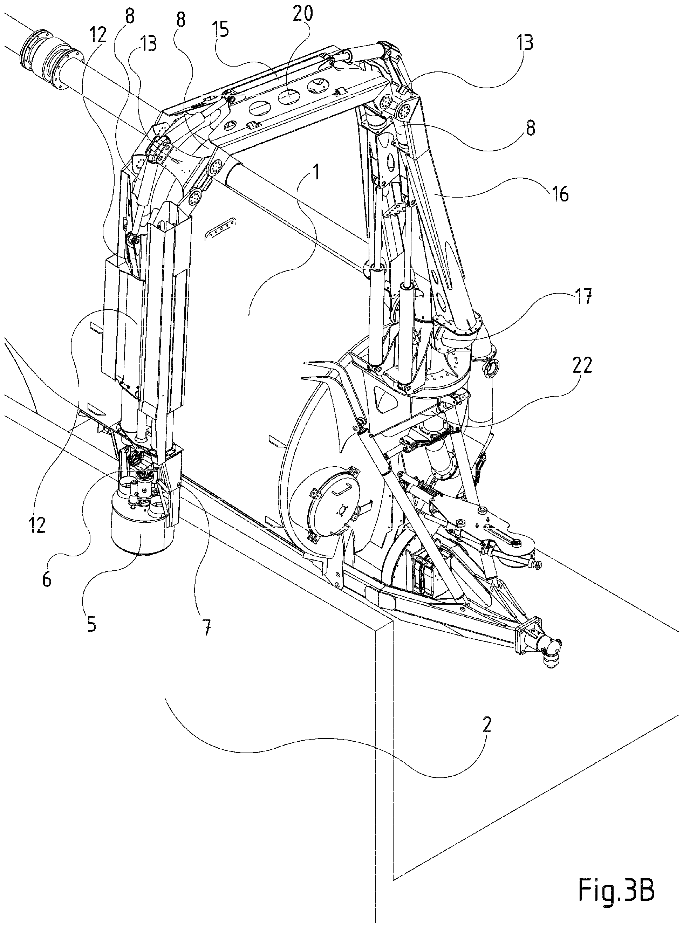

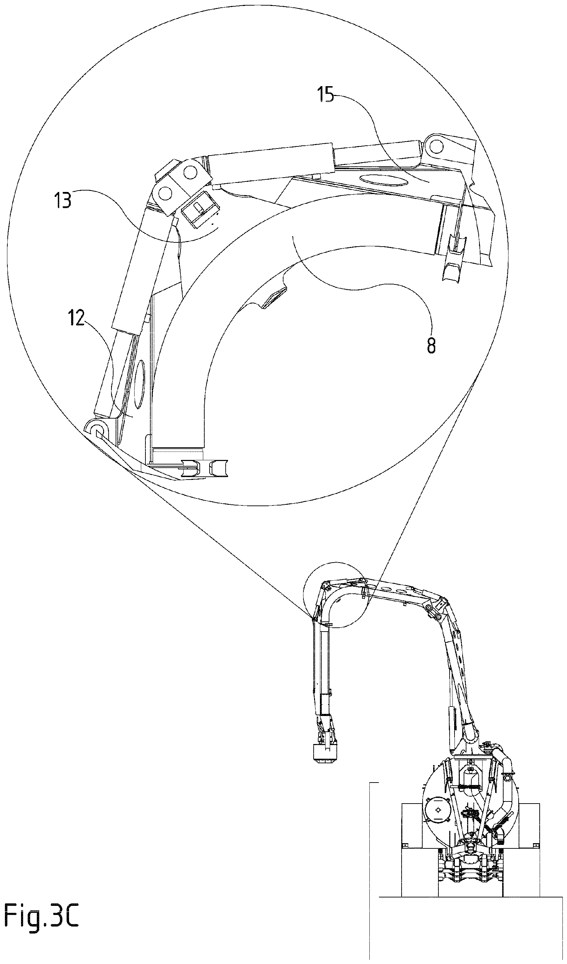

Figs. 3A-3C illustrate a slurry wagon 1 according to an embodiment of the invention as seen from the front and obliquely from above, respectively, with the crane arm in a partly unfolded position. It is shown schematically how the slurry wagon 1 is parked so that the pump head 5 is placed over a slurry storage tank 2, ready for being lowered into it. These figures illustrate the flexibility of the pump crane when it, as shown, has been rotated in the turntable under the tower 18 as well as in the swivel 17 connecting the double piping to the tower 18 and has also been bent in both of the two double-hinged knuckle joints 13. Apart from this, there is a telescopic joint 9, which is fully contracted in these figures, and a 45° knuckle joint 7 immediately before the pump head 5, which has also not been used in these figures.

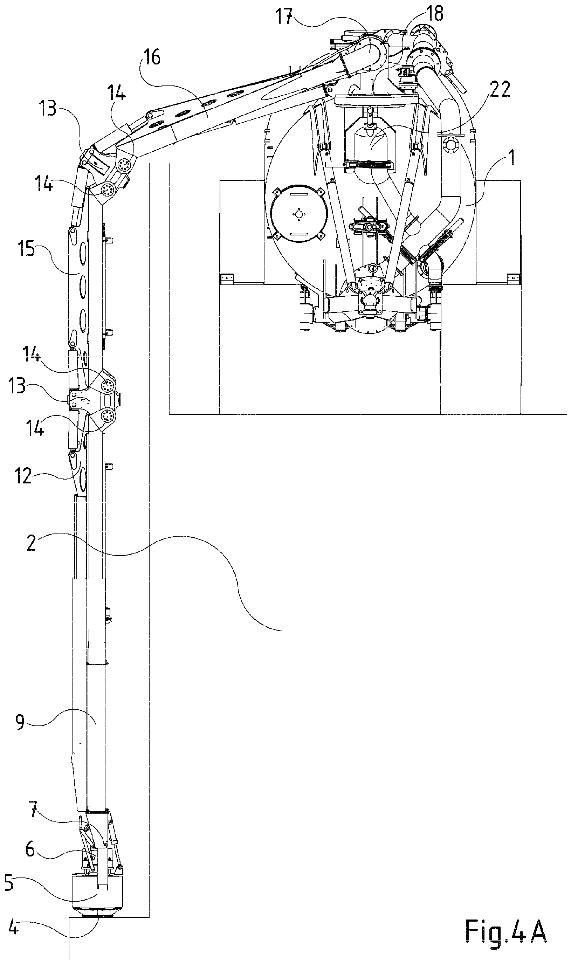

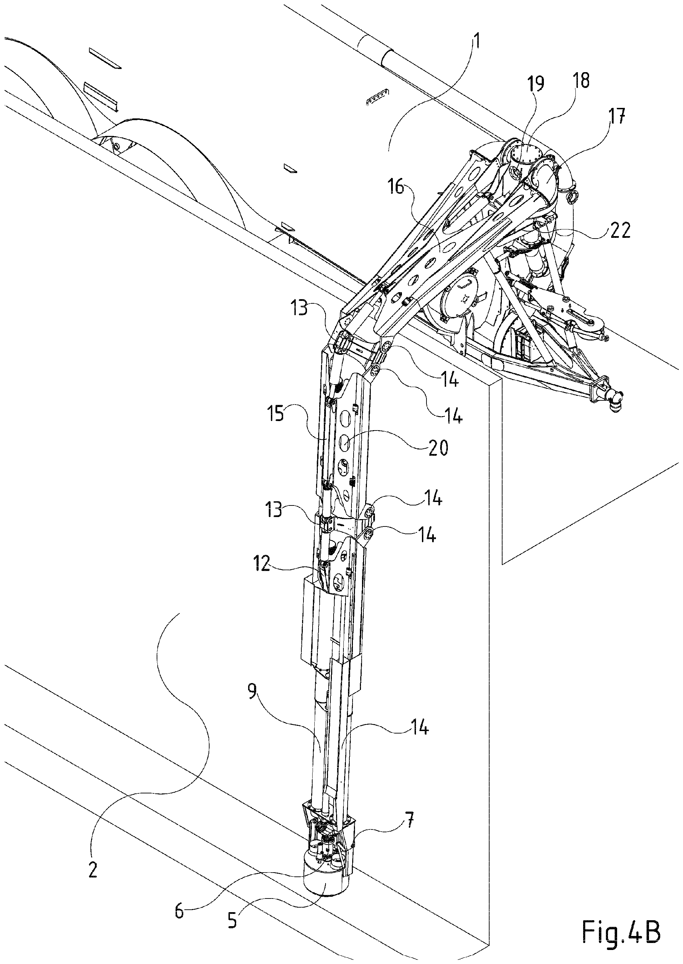

Figs. 4A og 4B illustrate the slurry wagon 1 as seen from the same angles as in Figs. 3A og 3B, but with the crane arm in a lowered and fully extended position. These figures illustrate the flexibility of the crane arm even further, and it is seen that the pump crane is capable of reaching very deep down, typically about 6 meters, into a storage tank 2 or similar, when the telescopic joint 9 is in its most extended position. In Fig. 4B, the cabling for the telescopic joint 9 is illustrated schematically.

Figs. 3A og 4A illustrate schematically how the pump head 5 at its inlet can be provided with so-called slide valves 4. By using a so-called free-wheeling pump and suitably inserted valves, it can be obtained that slurry can by pumped in both directions through the piping, i.e. into as well as out of the tank of the slurry wagon 1.

### List of reference numbers

- 1.: Slurry wagon or trailer
- 2.: Slurry storage tank
- 3.: Waste tray with inlet to tank
- 4.: Slide valve at inlet to pump head
- 5.: Pump head
- 6.: Oil motor for pump head
- 7.: 45° knuckle joint
- 8.: Flexible slurry hose
- 9.: Telescopic joint with to pipes
- 10.: Piston for extension of telescopic joint
- 11.: Cabling for telescopic joint
- 12.: Outermost intermediate part with two pipes
- 13.: Double-hinged knuckle joint
- 14.: Pivot point for knuckle joint
- 15.: Mid-most intermediate part with two pipes
- 16.: Innermost intermediate part with two pipes
- 17.: Swivel with double piping
- 18.: Tower with turntable, two inlets and overflow pipe
- 19.: Overflow pipe in tower
- 20.: Hydraulic hoses
- 21.: Oil motor for swinging the crane
- 22.: Console on vehicle

## Claims

1. A pump crane for filling and emptying a slurry wagon or trailer (1), which pump crane is mounted on the slurry wagon or trailer by means of a turntable and comprises a crane arm with
a plurality of intermediate parts (12, 15, 16) connected by knuckle joints (13),
a piping from the turntable to a hydraulic pump head (5) arranged at the outermost end of the crane arm, and
means for pumping slurry through the piping to or from the pump head,
wherein the pump crane further comprises means for swinging, raising, lowering, unfolding and folding the crane arm,
wherein the piping is composed of
solid pipe sections constituting supporting parts of the intermediate parts and flexible slurry hoses (8) in the knuckle joints, and
wherein the knuckle joints are double-hinged, each knuckle joint being rotatably connected to the two neighbouring intermediate parts of the crane arm in such a way that there is a physical distance between the two pivot points, in which the knuckle joint can be rotated relatively to each of the two intermediate parts, respectively.

2. The pump crane according to claim 1, wherein the physical distance between the two pivot points corresponds to between 20 % and 50 % of the arch length of the piece(s) of slurry hose passing through the knuckle joint.

3. The pump crane according to claim 1 or 2, wherein the pieces of flexible slurry hose are provided with assembled hose connections for mounting onto the solid pipe sections.

4. The pump crane according to any of the preceding claims, wherein the maximal bending in a knuckle joint between two neighbouring intermediate parts of the crane arm is at least 80°, preferably at least 100°.

5. A slurry wagon or trailer (1) comprising a pump crane according to any of the preceding claims.

## Patentansprüche

1. Pumpkran zum Füllen und Leeren eines Schlammwagens oder -anhängers (1), wobei der Pumpkran an dem Schlammwagen oder -anhänger mittels einer Drehplatte montiert ist und einen Kranarm umfasst mit:
einer Mehrzahl von Zwischenteilen (12, 15, 16), die durch Winkelgelenke (13) verbunden sind,
einer Verrohrung von der Drehplatte zu einem Hydraulikpumpkopf (5), der am äußersten Ende des Kranarms angeordnet ist,
Mittel zum Pumpen von Schlamm durch die Verrohrung zu oder von dem Pumpkopf,
wobei der Pumpkran ferner Mittel zum Schwenken, Heben, Senken, Auseinanderklappen und Zusammenklappen des Kranarms hat,
wobei die Verrohrung besteht aus
festen Rohrsektionen, die tragende Teile der Zwischenteile bilden, und
flexiblen Schlammschläuchen (8) in den Winkelgelenken, und
wobei die Winkelgelenke doppelgelenkig sind, wobei jedes Winkelgelenk drehbar mit den zwei benachbarten Zwischenteilen des Kranarms auf eine solche Weise verbunden ist, dass ein physischer Abstand zwischen den beiden Drehpunkten besteht, in dem das Winkelgelenk jeweils relativ zu jedem der beiden Zwischenteile gedreht werden kann.

2. Pumpkran nach Anspruch 1, wobei der physische Abstand zwischen den beiden Drehpunkten 20 % bis 50 % der Bogenlänge der ein oder mehreren Stücke von durch das Winkelgelenk passierendem Schlammschlauch entspricht.

3. Pumpkran nach Anspruch 1 oder 2, wobei die Stücke von flexiblem Schlammschlauch mit zusammengefügten Schlauchverbindungen zum Montieren an den festen Rohrsektionen versehen sind.

4. Pumpkran nach einem der vorherigen Ansprüche, wobei die maximale Biegung in einem Winkelgelenk zwischen zwei benachbarten Zwischenteilen des Kranarms wenigstens 80°, vorzugsweise wenigstens 100° beträgt.

5. Schlammwagen oder -anhänger (1), der einen Pumpkran nach einem der vorherigen Ansprüche umfasst.

## Revendications

1. Grue à pompe pour remplir et vider une citerne ou une remorque à lisier (1), cette grue à pompe étant montée sur la citerne ou la remorque à lisier au moyen d'une plate-forme tournante et comprenant un bras de grue avec
une pluralité de parties intermédiaires (12, 15, 16) raccordées par des raccords à genouillère (13),
une tubulure allant de la plate-forme tournante à une tête de pompe hydraulique (5) agencée au niveau de l'extrémité située le plus à l'extérieur du bras de grue, et
des moyens pour pomper le lisier à travers la tubulure vers la tête de pompe, ou à partir de cette dernière,
cas dans lequel la grue à pompe comprend en outre des moyens pour faire pivoter, relever, abaisser, déployer et replier le bras de grue,
cas dans lequel la tubulure est composée de :
sections de conduite solides qui constituent des parties de support des parties intermédiaires, et
tuyaux à lisier flexibles (8) dans les raccords à genouillère, et
cas dans lequel les raccords à genouillère sont à double charnière, chaque raccord à genouillère étant raccordé de manière rotative aux deux parties intermédiaires voisines du bras de grue, de telle manière qu'il existe une distance physique entre les deux points de pivot, dans lesquels le raccord à genouillère peut être tourné relativement à chacune des deux parties intermédiaires, respectivement.

2. Grue à pompe selon la revendication 1, la distance physique entre les deux points de pivot correspondant à entre 20 % et 50 % de la longueur d'arc de la pièce / des pièces du tuyau à lisier passant à travers le raccord à genouillère.

3. Grue à pompe selon la revendication 1 ou 2, les pièces du tuyau à lisier flexible étant munies de raccords de tuyau assemblés en vue d'un montage sur les sections de conduite solides.

4. Grue à pompe selon l'une quelconque des revendications précédentes, le fléchissement maximal dans un raccord à genouillère entre deux parties intermédiaires voisines du bras de grue étant d'au moins 80°, de préférence d'au moins 100°.

5. Citerne ou remorque à lisier (1) comprenant une grue à pompe selon l'une quelconque des revendications précédentes.
